# EUROPÄISCHE PATENTSCHRIFT

(11) **EP 1 211 581 B1**
(45) Veröffentlichungstag und Bekanntmachung des Hinweises auf die Patenterteilung: **16.02.2005**
(21) Anmeldenummer: 01126312.6
(22) Anmeldetag: 06.11.2001
(51) Int. Cl.: G05B 19/00

(54) **Elektrisches Haushaltsgerät**
Electrical household appliance
Appareil domestique électrique

(30) Priorität: 24.11.2000 DE 10058412
(43) Veröffentlichungstag der Anmeldung: 05.06.2002
(73) Patentinhaber: BSH Bosch und Siemens Hausgeräte GmbH, 81739 München (DE)
(72) Erfinder: Schmid, Erich, 93173 Wenzenbach (DE); Laaser, Walter, Dr. rer. nat., 93164 Laaber (DE)

(56) Entgegenhaltungen:
- DE-U- 9 300 534
- US-A- 4 977 515

## Beschreibung

Die Erfindung betrifft ein elektrisches Haushaltsgerät sowie ein Verfahren zum Betrieb einer Speichereinheit eines elektrischen Haushaltsgerätes gemäß den Merkmalen der unabhängigen Ansprüche.

Bekannte elektrische Haushaltsgeräte, wie beispielsweise Küchenherde, Waschmaschinen oder dergleichen, sind häufig mit einer elektronischen Steuerung bzw. Regelung ausgestattet. Dabei werden die Signale eines oder mehrerer Sensoren in einer elektronischen Rechen- und Steuereinheit erfasst. In Abhängigkeit von Benutzereingaben sowie von den erfassten Sensorsignalen und wenigstens einem in der Rechen- und Steuereinheit gespeicherten - und ggf. zuvor von einer Bedienperson ausgewählten - Steuerprogramm wird das elektrische Haushaltsgerät gesteuert, bzw. werden Aktoren angesteuert, welche die Funktionen des Haushaltsgerätes beeinflussen. Unter einem Aktor wird in diesem Zusammenhang jedes elektrisch oder elektronisch ansteuerbare Bau- oder Stellelement verstanden, das die Funktion im Haushaltsgerät beeinflusst oder darstellt, beispielsweise eine Heizplatte eines Küchenherdes.

Je nach Ausstattung und Leistungsumfang des Haushaltsgerätes können in der Rechenund Steuereinheit auch Algorithmen zur Fehlererkennung implementiert sein. Dabei werden die von den Sensoren gelieferten Signale auf ihre Plausibilität hin geprüft und bei erkannten Fehlern, d.h. bei fehlender Plausibilität, bestimmte Werte in einem Fehlerspeicher abgelegt. Dieser Fehlerspeicher kann anschließend von Kundendienstmitarbeitern, bspw. mit Hilfe eines portablen Rechners, ausgelesen werden, wenn dieser Rechner mit dem Haushaltsgerät verbunden wird.

Nachteilig an diesem Verfahren der Fehlerauslesung ist der nicht unerhebliche Aufwand für die Auslesung des Fehlerspeichers direkt am Haushaltsgerät. Dieser Aufwand kann insbesondere dann unverhältnismäßig sein, wenn sich herausstellt, dass nur ein geringfügiger Fehler vorlag, der eventuell nur auf einer Fehlbedienung durch den Benutzer beruht hatte und leicht durch diesen hätte abgestellt werden können. In diesem Fall müsste ein Kundendienstmitarbeiter zum Aufstellort des Haushaltsgerätes, d.h. zum Kunden, kommen, unabhängig davon, ob dieser den Fehler selbst beheben könnte oder nicht. An einer Waschmaschine könnte beispielsweise ein Fehler angezeigt werden, weil der Wasserzulauf versperrt ist. Der Kunde könnte einen solchen Fehler ohne weiteres selbst beheben.

Weiterhin sind Ausführungsformen von elektrischen Haushaltsgeräten bekannt, bei denen einem Benutzer ein auftretender Fehler optisch kenntlich gemacht wird, bspw. in Form einer Anzeige von Fehlercodes auf einem Bildschirm und/oder einer Ziffern- und/oder Klarschriftanzeige an einem Display an der Gerätefrontseite. Wird vom Benutzer dann der Kundendienst fernmündlich verständigt, muss diesem neben dem vom Benutzer abgelesenen Fehlercode zusätzlich eine Identifikationsnummer übermittelt werden, die es dem Kundendienst erlaubt, das Gerät überhaupt zu identifizieren. Ggf. muss hierbei zusätzlich das Kaufdatum übermittelt werden.

Nachteilig an diesen beschriebenen Verfahren ist der relativ hohe Übermittlungsaufwand sowie das dennoch vorhandene erhebliche Risiko der mangelnden Informationsübermittlung an einen Kundendienst.

Des weiteren ist in US 4 977 515 eine separate Kontrolleinrichtung zur Messung des Energieverbrauchs eines Hausgeräts beschrieben, die von einem Elektrizitätswerk aus kontrollierbar ist. Diese separate Kontrolleinrichtung wird zwischen das Hausgerät und die Stromversorgung geschaltet und weist einen Sensor zur Erfassung des Stromverbrauchs und einen Speicher zur Speicherung der erfassten Daten auf.

Der Erfindung liegt die Aufgabe zugrunde, ein elektrisches Haushaltsgerät zur Verfügung zu stellen, das eine Kommunikationsschnittstelle, bspw. zu einem Kundendienst, mit einer möglichst zuverlässigen Fehlerdatenübertragung aufweist, sowie ein entsprechendes Betriebsverfahren zur Kommunikation.

Diese Aufgabe wird mit den Merkmalen der unabhängigen Ansprüche gelöst. Ein die Erfindung betreffendes elektrisches Haushaltsgerät weist wenigstens einen Sensor zur Erfassung und wenigstens einen Aktor zur Beeinflussung wenigstens eines Betriebsparameters des elektrischen Haushaltsgeräts, eine mit dem Sensor und dem Aktor gekoppelte zentrale Rechen- und Steuereinheit sowie eine mit der zentralen Rechen- und Steuereinheit elektrisch gekoppelten Speichereinheit zur Speicherung von Fehlerparametern auf. An die Speichereinheit werden die Fehlerparameter geliefert, die anhand von auftretenden Inplausibilitäten der vom wenigstens einen Sensor gelieferten Signale von der zentralen Rechen- und Steuereinheit errechnet werden. Erfindungsgemäß ist die wenigstens eine Speichereinheit lösbar mit dem elektrischen Haushaltsgerät verbunden und kann im vom elektrischen Haushaltsgerät getrennten Zustand mit einem Servicerechner kommunizieren und zu diesem relevante Gerätedaten übertragen. Bevorzugt ist die Speichereinheit elektrisch und mechanisch lösbar mit dem Haushaltsgerät verbindbar und weist Mittel auf zur Kommunikation mit einer Gegenstelle, so dass die Speichereinheit im von Haushaltsgerät getrennten Zustand über ein öffentliches Kommunikationsnetz mit der Gegenstelle kommunizieren kann. Diese spezielle Anordnung weist insbesondere den Vorteil auf, dass eine zuverlässige Fehlerdatenübertragung zu einer Gegenstelle eines Kundendienstes gewährleistet werden kann, ohne das Risiko einer fehlerhaften oder unvollständigen mündlichen Übermittlung durch eine Bedienperson.

In einer bevorzugten Ausgestaltung weist die Speichereinheit einen Schallwandler auf zur akustischen Kommunikation mit einem Endgerät des öffentlichen Kommunikationsnetzes. Zu diesem Zweck kann in der Speichereinheit die Fehlerparameter in eine codierte Tonfolge gewandelt werden, die über den Schallwandler ausgebbar ist. Die erfindungsgemäße steckbare Speichereinheit enthält ein Speichermodul, auf dem gerätespezifische Daten fest abgespeichert sind, bspw. eine Geräteidentifikationsnummer. Zudem ist auf einem beschreibbaren Speicher ein Fehlercode abgespeichert, der einem bestimmten aufgetretenen Fehler einen bestimmten Code zuordnet. Diese Konfiguration hat den Vorteil einer weitgehenden Kompatibilität mit fast überall verfügbaren öffentlichen und/ oder privaten Kommunikations- bzw. Fernsprechnetzen. Zur Übertragung der Fehlerdaten genügt die aus dem Haushaltsgerät entnommene Speichereinheit, die an ein Mikrofon eines Festnetz- oder Mobiltelefons gehalten wird, bei dem zuvor die Servicenummer gewählt wurde. Die weitere Übertragung aller relevanten Geräte- und Fehlerdaten verläuft automatisch ohne weiteres Zutun der Bedienperson und somit auch ohne das Risiko einer fehlerhaften oder unvollständigen Informationsübertragung.

Weitere Vorteile und bevorzugte Ausführungsformen können den Unteransprüchen sowie der Figurenbeschreibung entnommen werden.

Die Erfindung wird im folgenden anhand der zugehörigen Zeichnung erläutert. Es zeigen:
- Figur 1: ein Schemabild zur Verdeutlichung der Funktion der Steuerungskomponenten eines erfindungsgemäßen elektrischen Haushaltsgerätes und
- Figur 2: eine abnehmbare Speichereinheit in schematischer Darstellung.

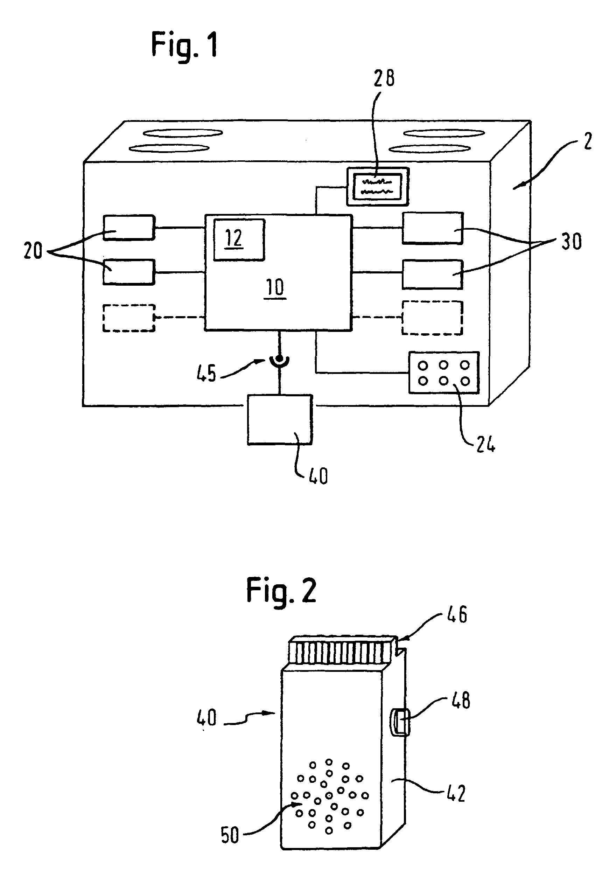

Im folgenden wird ein Ausführungsbeispiel des erfindungsgemäßen elektrischen Haushaltsgerätes anhand der Figuren 1 und 2 erläutert. Gleiche Teile sind dabei grundsätzlich mit gleichen Bezugszeichen versehen und werden teilweise nicht mehrfach erläutert.

Die Figur 1 verdeutlicht anhand eines Blockschaltbildes die grundsätzliche Funktion eines erfindungsgemäßen elektrischen Haushaltsgerätes in einer beispielhaft gewählten Ausführungsform. Dabei ist in einem elektrischen Haushaltsgerät 2 eine zentrale Rechen- und Steuereinheit 10 vorgesehen, welche mit elektrischen Eingängen für mehrere Sensoren 20 sowie mit elektrischen Ausgängen für mehrere Aktoren 30 versehen ist. Ein solcher Sensor 20 kann bspw. ein Temperatursensor in einem elektrischen Herd oder ein Durchflusssensor in einer Waschmaschine sein. Unter einem Aktor 30 ist in diesem Zusammenhang jedes elektrisch ansteuerbare Bau- und/oder Stellelement zu verstehen, das eine Funktion im Haushaltsgerät beeinflusst oder darstellt. Ein solcher Aktor 30 kann bspw. eine Heizplatte eines elektrischen Herdes, eine Wasserpumpe oder ein elektrischer Heizstab in einer Waschmaschine sein.

Erkennbar ist weiterhin ein Speicher 12, welcher der zentralen Rechen- und Steuereinheit 10 zugeordnet ist. Dieser Speicher 12 kann wahlweise als interner Speicher und damit als integraler Bestandteil der Rechen- und Steuereinheit 10 realisiert sein. Ebenso möglich ist jedoch ein von der zentralen Rechen- und Steuereinheit 10 separierter und damit externer Speicher. Im folgenden wird dieser Speicher aus Vereinfachungsgründen nur noch als interner Speicher 12 bezeichnet.

Die zentrale Rechen- und Steuereinheit 10 ist darüber hinaus mit wenigstens einem Bedienfeld 24 verbunden; damit werden Benutzereingaben an die zentrale Rechen- und Steuereinheit 10 übermittelt. Dieses Bedienfeld 24 kann bspw. mehrere Druck- oder Drehtasten oder -schalter umfassen, über die verschiedene Funktionen oder Programme am elektrischen Haushaltsgerät wählbar sind. Anstatt des Bedienfeldes 24 oder auch zusätzlich zu diesem kann optional eine Schnittstelle vorgesehen sein, über die eine externe Ansteuerbarkeit bzw. Kommunikation des elektrischen Haushaltsgerätes, bspw. mit einem Hausinstallationsnetz oder dergleichen, realisiert sein kann. Ein mit der zentralen Rechenund Steuereinheit 10 gekoppeltes Anzeigenfeld 28 dient dazu, dem Benutzer während des Betriebes jederzeit eine Statusanzeige zu geben. Das Anzeigenfeld 28 kann bspw. als numerische Anzeige, als Balkenanzeige oder auch als grafisches Display ausgestaltet sein, je nach gewünschtem Ablesekomfort. Gegebenenfalls können über das Anzeigenfeld 28 auch Fehler beziehungsweise bestimmte Fehlercodes dargestellt werden, damit ein Benutzer bei Fehlfunktionen informiert und gewarnt wird und bei Bedarf einen Kundendienst verständigen kann.

Mit der zentralen Rechen- und Steuereinheit 10 steht über eine Steckverbindung 45 eine erfindungsgemäße externe Speichereinheit 40 in elektrischer Verbindung, die im folgenden anhand der Figur 2 in einer beispielhaften Ausführungsform näher erläutert wird. An die Speichereinheit 40 wird jeder in der zentralen Rechen- und Steuereinheit 10 erkannte Fehler übermittelt, damit er dort - ggf. zusätzlich zum internen Speicher 12 - abgespeichert werden kann.

Die Figur 2 zeigt in perspektivischer Schemadarstellung eine erfindungsgemäße Speichereinheit 40, die über ein im wesentlichen flaches Gehäuse 42 sowie einer aus diesem Gehäuse 42 ragenden Kontaktleiste 46 verfügt, die Teil der Steckverbindung 45 ist. Mit der Kontaktleiste 46 voran kann die Speichereinheit 40 in einen korrespondierenden Einschubschacht im elektrischen Haushaltsgerät 2 eingeschoben werden. Dieser Einschubschacht kann sich für die Bedienperson gut zugänglich bspw. in der Gehäusefrontseite, vorzugsweise unter einer Abdeckklappe, befinden. Dieser Einschubschacht kann bspw. ein standardisierter sog. Schnittstellen-Slot sein, der ggf. auch für weitere Zwecke Verwendung finden kann, bspw. um in bestimmten Zeitabständen eine Ergänzung bzw. ein Update der im Gerät abgespeicherten Programmversionen zu übermitteln.

Die Speichereinheit 40 ist mit einem Schallwandler 50 zur Erzeugung eines codierten Schallsignals aus den im Speicher abgelegten Fehlerkennwerten versehen. Dieser Schallwandler 50 ist typischerweise ein flacher Lautsprecher, der in der Lage sein muss, Frequenzen in einem Bereich zu erzeugen, die von einem herkömmlichen Femsprechgerät aufgenommen und übertragen werden können. Ein typischer Frequenzbereich hierfür ist ein Bereich von 1000 bis 8000 Hertz. Weiterhin ist ein seitlich am Gehäuse 42 befindlicher Bedienknopf 48 erkennbar, mit dem die Signalübertragung ausgelöst werden kann. Damit die herausnehmbare Speichereinheit 40 die in ihr abgespeicherten Daten zuverlässig über eine gewisse Zeit sichern kann, und damit sie den Schallwandler ansteuern kann, muss sie über eine zusätzliche autonome Stromversorgung verfügen, bspw. in Form eines Kondensators, der im eingesteckten Zustand der Speichereinheit 40 permanent geladen wird. Anstatt des Kondensators kann die gleiche Funktion auch von einem Akkuelement wahrgenommen werden, das ebenfalls im eingesteckten Zustand der Speichereinheit 40 mit einer Stromversorgung in Verbindung steht.

Die Funktion sowie die Bedienung der erfindungsgemäßen Speichereinheit 40 funktioniert folgendermaßen: Bei einem von der zentralen Rechen- und Steuereinheit 10 im elektrischen Haushaltsgerät 2 erkannten Fehler, der bspw. aus einer Plausibilitätsüberprüfung verschiedener sich widersprechender Signale mehrerer Sensoren 20 hergeleitet wurde, wird ein Fehlersignal im Anzeigenfeld 28 angezeigt. Bei einer Klarschriftanzeige kann dies bspw. durch eine Wortdarstellung "FEHLER" realisiert sein; bei einer Anzeige aus mehreren Leuchtfeldern kann bspw. eine rote Fehlersignallampe aufleuchten. Auf einer Bildschirmanzeige können darüber hinaus ggf. weitere Hinweise hinsichtlich der Art des aufgetretenen Fehlers dargestellt werden. Gleichzeitig wird an die herausnehmbare Speichereinheit 40 ein individueller Fehlercode übermittelt, der in dieser abgelegt wird, und der in ein elektrisches Codesignal transformiert werden kann, das vom Schallwandler 50 in ein Schallsignal gewandelt werden kann.

Bei einem vom Anzeigenfeld 28 angezeigten Fehler ist der Bedienperson signalisiert, dass die Speichereinheit 40 den relevanten Fehlercode abgespeichert hat. Die Speichereinheit 40 kann daher aus ihrem Einschubschacht bzw. -slot im elektrischen Haushaltsgerät 2 entnommen werden. Anschließend kann die Bedienperson eine bestimmte Servicenummer an einem herkömmlichen Fernsprechgerät wählen, das Gehäuse 42 der Speichereinheit 40 so an das Fernsprechgerät halten, dass der Schallwandler 50 der Speichereinheit 40 unmittelbar an der Sprechmuschel, d.h. am Mikrofon, des Femsprechgerätes anliegt und gleichzeitig den Bedienknopf 48 drücken, damit die Speichereinheit 40 mit dem Rechner der angewählten Gegenstelle der Servicezentrale kommunizieren und an diese den aufgetretenen Fehler übermitteln kann.

Hierzu wählt die Bedienperson zweckmäßigerweise eine in der Bedienungsanleitung des elektrischen Haushaltsgeräts 2 oder im günstigeren Fall auf der Gehäuseoberfläche der Speichereinheit 40 angegebenen Servicenummer. An die angewählte Gegenstelle können dann von der Speichereinheit 40 alle relevanten Daten wie individuelle Gerätekennung, Kaufdatum, Fehlercode, etc. übermittelt werden. Eine derartige umfassende Übermittlung aller relevanten Daten erspart sowohl mehrmaliges Nachfragen durch eine Serviceperson an der Gegenstelle der Fernsprechverbindung wie auch möglicherweise unnötige Servicebesuche aufgrund Fehlbedienungen des Haushaltsgeräts, ohne dass echte Fehler aufgrund Gerätestörungen aufgetreten wären.

Nachdem die genannten Daten an die Servicestelle übermittelt wurden, kann der angesprochene Kundendienst die Störung oder Fehlbedienung am Gerät näher eingrenzen. Bei Fehlbedienungen und sog. Scheinfehlem (d.h. solchen, die auf einer Fehlbedienung beruhen) kann die Servicestelle die Bedienperson bei der Behebung des Fehlers unterstützen, ohne vor Ort kommen zu müssen. Sollte dennoch ein Servicebesuch eines Außendienstmitarbeiters notwendig sein, kann dieser zumindest die gerätespezifischen Werkzeuge sowie die voraussichtlich benötigten Ersatzteile sofort mitnehmen, was einen zusätzlichen Besuch einsparen kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Elektrisches Haushaltsgerät mit:
- wenigstens einem Sensor (20) zur Erfassung wenigstens eines Betriebsparameters des elektrischen Haushaltsgeräts (2),
- wenigstens einem Aktor (30) zur Beeinflussung wenigstens eines Betriebsparameters des elektrischen Haushaltsgeräts (2),
wobei der wenigstens eine Sensor (20) und der wenigstens eine Aktor (30) elektrisch mit einer zentralen Rechen- und Steuereinheit (10) zur Steuerung des elektrischen Haushaltsgeräts (2) gekoppelt sind,
- wenigstens einer mit der zentralen Rechen- und Steuereinheit (10) elektrisch gekoppelten Speichereinheit (40) zur Speicherung von Fehlerparametern, die bei auftretenden Inplausibilitäten der vom wenigstens einen Sensor (20) gelieferten Signale von der zentralen Rechen- und Steuereinheit (10) errechnet und an die Speichereinheit übermittelt werden können,
**dadurch gekennzeichnet,**
**dass** die wenigstens eine Speichereinheit (40) lösbar mit dem elektrischen Haushaltsgerät (2) verbunden ist, und
**dass** die Speichereinheit (40) im vom elektrischen Haushaltsgerät (40) getrennten Zustand mit einem Servicerechner kommunizieren und zu diesem relevante Gerätedaten übertragen kann.

2. Elektrisches Haushaltsgerät nach Anspruch 1, **dadurch gekennzeichnet, dass** die zentrale Rechen- und Steuereinheit (10) einen internen Speicher (12) aufweist, in dem die an die Speichereinheit (40) gelieferten Fehlerparameter zusätzlich speicherbar sind.

3. Elektrisches Haushaltsgerät nach einem der Ansprüche 1 oder 2, **dadurch gekennzeichnet, dass** die Speichereinheit (40) elektrisch und mechanisch lösbar mit dem Haushaltsgerät (2) verbindbar ist.

4. Elektrisches Haushaltsgerät nach einem der vorstehenden Ansprüche, **dadurch gekennzeichnet, dass** die Speichereinheit (40) Mittel aufweist zur Kommunikation mit einer Gegenstelle.

5. Elektrisches Haushaltsgerät nach einem der vorstehenden Ansprüche, **dadurch gekennzeichnet, dass** die Speichereinheit (40) im von Haushaltsgerät (2) getrennten Zustand über ein öffentliches Kommunikationsnetz mit der Gegenstelle kommunizieren kann.

6. Elektrisches Haushaltsgerät nach einem der vorstehenden Ansprüche, **dadurch gekennzeichnet, dass** die Speichereinheit (40) einen Schallwandler (50) aufweist zur akustischen Kommunikation mit einem Endgerät des öffentlichen Kommunikationsnetzes.

7. Elektrisches Haushaltsgerät nach einem der vorstehenden Ansprüche, **dadurch gekennzeichnet, dass** in der Speichereinheit (40) die Fehlerparameter in eine codierte Tonfolge gewandelt werden können, die über den Schallwandler ausgebbar ist.

8. Verfahren zur Kommunikation einer mit einem elektrischen Haushaltsgerät (2) lösbar verbundenen Speichereinheit (40) gemäß einem der Ansprüche 1 bis 7, **dadurch gekennzeichnet, dass** die Speichereinheit (40) mit einem Schallwandler (50) zur. akustischen Wiedergabe eines in der Speichereinheit (40) gespeicherten Fehlercodes versehen ist, und dass die Speichereinheit (40) mit einer Gegenstelle eines Kommunikationsnetzes kommunizieren kann.

## Claims

1. Electric domestic appliance comprising:
- at least one sensor (20) for detecting at least one operating parameter of the electric domestic appliance (2),
- at least one actuator (30) for influencing at least one operating parameter of the electric domestic appliance (2), wherein the at least one sensor (20) and the at least one actuator (30) are electrically coupled with a central computing and control unit (20) for controlling the electric domestic appliance (2),
- and at least one memory unit (40), which is electrically coupled with the central computing and control unit (10), for storage of fault parameters which can be calculated by the central computing and control unit (10) in the case of occurring implausibilities of the signals delivered by the at least one sensor (20) and can be transmitted to the memory unit, **characterised in that** the at least one memory unit (40) is detachably connected with the electric domestic appliance (2) and that the memory unit (40) in the state of being separated from the electric domestic appliance (40) can communicate with a service computer and transmit relevant appliance data thereto.

2. Electric domestic appliance according to claim 1, **characterised in that** the central computing and control unit (10) has an internal memory (12) in which the fault parameters delivered to the memory unit (40) can be additionally stored.

3. Electric domestic appliance according to one of claims 1 and 2, **characterised in that** the memory unit (40) is connectible with the domestic appliance (2) to be electrically and mechanically detachable.

4. Electric domestic appliance according to one of the foregoing claims, **characterised in that** the memory unit (40) comprises means for communication with a remote station.

5. Electric domestic appliance according to one of the foregoing claims, **characterised in that** the memory unit (40) in the state of being separated from the domestic appliance (2) can communicate with the remote station by way of a public communications network.

6. Electric domestic appliance according to one of the foregoing claims, **characterised in that** the memory unit (40) comprises a sound converter (50) for acoustic communication with a terminal of the public communications network.

7. Electric domestic appliance according to one of the foregoing claims, **characterised in that** the fault parameters can be converted in the memory unit (40) into a coded sound sequence which can be issued by way of the sound converter.

8. Method of communication of a memory unit (40), which is detachably connected with an electric domestic appliance (2), according to one of claims 1 to 7, **characterised in that** the memory unit (40) is provided with a sound converter (50) for acoustic reproduction of a fault code stored in the memory unit (40) and that the memory unit (40) can communicate with a remote station of a communications network.

## Revendications

1. Appareil ménager électrique comprenant :
- au moins un capteur (20) pour l'enregistrement d'au moins un paramètre de service de l'appareil ménager (2) électrique,
- au moins un actionneur (30) pour influer sur au moins un paramètre de service de l'appareil ménager (2) électrique, le au moins un capteur et le au moins un actionneur étant couplés électriquement avec une unité centrale de calcul et de commande (10) pour la commande de l'appareil ménager (2) électrique,
- au moins une unité de mémoire (40) couplée électriquement avec l'unité centrale de calcul et de commande (10) pour le stockage de paramètres d'erreurs, qui peuvent être calculés par l'unité centrale de calcul et de commande (10) s'il apparaît des invraisemblances des signaux fournis par l'au moins un capteur (20) et peuvent être transmis à l'unité de mémoire,
**caractérisé en ce que**,
la au moins une unité de mémoire (40) est reliée de façon amovible à l'appareil ménager (2) électrique, et
**en ce que** l'unité de mémoire (40) peut communiquer avec un ordinateur de service dans l'état séparé de l'appareil ménager (40) électrique et peut transmettre des données d'appareils importantes à cet ordinateur.

2. Appareil ménager électrique selon la revendication 1, **caractérisé en ce que** l'unité centrale de calcul et de commande (10) présente une mémoire (12) interne, dans laquelle les paramètres d'erreurs fournis à l'unité de mémoire (40) peuvent être mémorisés en supplément.

3. Appareil ménager électrique selon l'une quelconque des revendications 1 ou 2, **caractérisé en ce que** l'unité de mémoire (40) peut être reliée électriquement et mécaniquement de façon amovible à l'appareil ménager (2).

4. Appareil ménager électrique selon l'une quelconque des revendications précédentes, **caractérisé en ce que** l'unité de mémoire (40) présente des moyens pour la communication avec un poste correspondant.

5. Appareil ménager électrique selon l'une quelconque des revendications précédentes, **caractérisé en ce que** l'unité de mémoire (40) peut communiquer au moyen d'un réseau de communication public avec le poste correspondant dans l'état séparé de l'appareil ménager (2).

6. Appareil ménager électrique selon l'une quelconque des revendications précédentes, **caractérisé en ce que** l'unité de mémoire (40) présente un transducteur acoustique (50) pour la communication acoustique avec un terminal du réseau de communication public.

7. Appareil ménager électrique selon l'une quelconque des revendications précédentes, **caractérisé en ce que** les paramètres d'erreur peuvent être convertis dans l'unité de mémoire (40) en une succession de sons codés qui peuvent être sortis au moyen du transducteur acoustique.

8. Procédé pour la communication d'une unité de mémoire (40) reliés de façon amovible à un appareil ménager (2) électrique selon l'une quelconque des revendications 1 à 7, **caractérisé en ce que** l'unité de mémoire (40) est pourvue d'un transducteur acoustique (50) pour la restitution acoustique d'un code d'erreur stocké dans l'unité de mémoire (40) et **en ce que** l'unité de mémoire (40) peut communiquer avec un poste correspondant d'un réseau de télécommunication.
